# EUROPEAN PATENT APPLICATION

(11) **EP 4 379 690 A1**
(43) Date of publication of application: **05.06.2024**
(21) Application number: 22306774.5
(22) Date of filing: 02.12.2022
(51) Int. Cl.: G07F 19/00, G06Q 10/30

(54) **METHOD FOR RECYCLING SMARTCARD AND CARD RECYCLING DEVICE**

(71) Applicant: THALES DIS FRANCE SAS, 92190 Meudon (FR)
(72) Inventor: CHAN, Keng Kun, 689673 SINGAPORE (SG); LIM, Sin Fung, 510740 SINGAPORE (SG)
(74) Representative: Castelo, Jérôme

(57) **Abstract**

The invention concerns a method for recycling a smart card comprising the steps of:
- inserting the smart card in a slot / card reader of an ATM (Automated Teller Machine),
- requesting the recycling of the smart card,
- conveying the smart cart to a punching platform of a card recycling device, said punching platform comprising a punch and an opening in alignment with said punch,
- conveying at least part of the smart card to a recycling compartment.

## Description

The invention relates to the field of smart cards, in particular to a method for recycling smart card and recycling device for smart card.

Today, the consumption of plastic on a global scale represents a major source of pollution. Every year, around 30 thousand tons of PVC is used just for banking card issuance, the equivalence of the weight of about 150 Boeing 747s.

Smart card such as payment card are not easy to recycle as it contains not only plastic but also metal, notably because of the metallic chip of the card.

Also, there is no regulation to impose how users should manage cards when it's expired or replaced. Most of the time, users throw them away in a bin after cutting the card into pieces. This solution represents several drawback. First, the separation of plastic and metal will not be done effectively, or only partially and at further stage by dedicated recycling facility. Also, banking card contain critical information of the user. Throwing such smart card in a bin, even cut in parts, represent a risk for the user.

An existing alternative is to request the user to return the credit cards to the bank counter. However, it causes many man-days to administrative the work to securely dispose of the cards. The users may not want to spend the time to go to the bank to return it.

### SUMMARY OF THE INVENTION

It is an object of the present invention to provide a method for recycling a smart card.

This object is achieved with a method according to claim 1. In particular, a method for recycling a smart card comprising the steps of:
- inserting the smart card in a slot of an Automated Teller Machine (ATM),
- requesting the recycling of the smart card,
- conveying the smart cart to a punching platform of a card recycling device, said punching platform comprising a punch and an opening in alignment with said punch,
- conveying at least part of the smart card to a recycling compartment.

By returning the smart card via an ATM, the user is assured that the smart card is safely retrieved and properly recycled. The risk of revealing critical information as well as the environmental impact of the end of life of the smart card are handled with a single operation.

Another advantage of the method according to the invention is that it uses existing infrastructure and function of an ATM which is coupled with a card recycling device. By using existing ATM, this method capitalize on the strong network of ATM across the world. The user will therefore not have to go to the bank counter but could simply use the ATM.

The method according to the invention can comprise one of the following features, taken individually or in any possible combination:
- the method comprises a step of deactivating the smart cart by hitting a chip of the smart card with the punch when said smart card is in the punching platform,
- the method comprises a step of collecting the card into a recycling compartment,
- the method comprises a step of perforating the smart card with a punch to extract a chip from said smart card when said smart card is in the punching platform,
- the method comprises a step of collecting the chip into a chip recycling compartment disposed under the punching platform and in alignment with the punch and the opening,
- the method comprises a step of shredding the chip when said chip is entering the chip recycling compartment,
- the method comprises a step of removing the chip or shredded chip from the chip recycling compartment and sending said chip or shredded chip to a metal recycling facility,
- the method comprises a step of shredding the ablated smart card (without the chip) when entering the card recycling compartment, and/or
- the method comprises a step of removing the ablated smart card or shredded ablated smart card from the card recycling compartment and sending said ablated smart card or shredded ablated smart card to a plastic recycling facility.

When the smart card of a user is intended for recycling, said user may find an ATM and insert the smart card in a slot or card reader of said ATM. This slot or card reader can be the same as used for other operation such as currency withdrawal, but it can also be a dedicated slot for card retrieving.

Once the card is detected by the ATM, a specific card retrieving option or card recycling option can be proposed to the user through a monitor of the ATM. By selecting the adequate option, the user can request the recycling of the smart card. Advantageously, the recycling is only performed after a request from of the user in order to avoid any automatic recycling without approval of the user.

The smart card is then conveyed to a punching platform of the card recycling device. The conveying steps are done inside the ATM 100, inside the card recycling device and/or inside the depository where the ATM is located.

Once positioned in the punching platform, the smart card can be selectively deactivated or perforated. The smart card or at least part of the smart card is then conveyed to a recycling compartment.

Alternatively, the card can be simply retrieved with no physical alteration and sent to a retrieving compartment. In this case, the user preferably has to select the retrieving option so that the smart card is retrieved without any alteration. Alternatively, the smart card can automatically be retrieved by the ATM, for example if user enters an incorrect code several times in a row. This retrieving function allows a strong backward compatibility with already existing ATM as it is a common function to retrieve the card without physical alteration.

Advantageously, the method comprises a step of deactivating the smart card. This deactivation is performed by hitting a chip of the smart card with the punch of the punching platform when said smart card is in the punching platform. The card is advantageously hit in the area where the antenna is located and/or where the chip is located. The impact of the punch on the smart card alters the antenna and/or the chip module. Consequently, the smart card loses its radiofrequency capabilities and said card is no longer operational. When the card is hit by punch during the deactivation step, said card is bent but is not ablated. The card is then conveyed to a card recycling compartment.

Preferably, the method comprises a step of perforating the smart card in order to extract the chip from said smart card. This allows separating the metal of the chip from the plastic of the ablated smart card. The smart card is perforated by the punch when said smart card is in the punching platform.

Once ablated from the smart card, the chip falls into a chip recycling compartment disposed under the punching platform and in alignment with the punch and the opening. This allows collecting the chip of the smart card into a dedicated compartment.

The method according to the invention can also comprise a step of shredding the chip when said chip is entering the chip recycling compartment. This step of shredding the chip allows a high level of security as the critical information carried by the chip are destroyed. The shredding of the chip also improves the subsequent recycling of the metallic materials of the chip.

These steps are followed by a step of removing the chip or the shredded chip from the chip recycling compartment. Then, the chip or shredded chip is sent to a metal recycling facility. Once the smart card has been ablated and its chip recovered in the chip recycle compartment, said ablated smart card is conveyed into a card recycling compartment of the card recycling device. When entering the card recycling compartment, said ablated smart card can be shredded. This step of shredding the chip allows a high level of security as the critical information carried by the smart card, such as the numbers of the card and personal information, are destroyed. Furthermore, this step of shredding the card allows to separate some metal that could be inside the card, such as antenna embedded inside the card, from the plastic material of said card. Thus, the shredding of the card also improve the subsequent recycling of the materials of the card.

According to another aspect, the invention concerns a card recycling device for an ATM and used in the method previously disclosed. In particular, the card recycling device comprises:
- conveying means to convey the smart card along the card recycling device,
- a punching platform comprising a punch and an opening in alignment with said punch,
- a card recycling compartment,
- connecting means to connect the card recycling device with an ATM.

The card recycling device according to the invention allows a safe returning of the smart card intended for recycling. The implementation and deployment of such device is facilitated by its compatibility with standard ATM to which it is connected by said connecting means. This means that the recycling option could be deployed in a large number of locations and therefore allowing to recycle a large number of card.

The punching platform of the card recycling device allows to a deactivation of the card for the least.

The card recycling device according to the invention can comprise one of the following features, taken individually or in any possible combination:
- the punch is configured to extend from a retracted position to a first deployed position in which it hits a chip of the smart card,
- the punch is further configured to extend form a retracted position to a second deployed position in which it perforates the smart card in order to extract the chip from said smart card,
- the device comprises a chip recycling compartment disposed under the punching platform and in alignment with the punch and the opening,
- the device comprises a first shredder at the entrance of the chip recycling compartment, and/or
- the device comprises a second shredder at the entrance of the card recycling compartment.

Advantageously, the card recycling device is configured to be at least partly inserted inside an ATM. The card recycling device can notably be connected to the ATM behind a card reject box of the ATM. Alternatively, the card recycling device can replace an existing card reject box of the ATM. The connection of the card recycling device to the ATM with the connecting means allows communication of information and control of conveying means.

The card recycling device can use some parts of the ATM. For example, a card slot of the ATM as well as a conveyor belt of the ATM could be used in order to convey the smart card intended for recycling to the conveying means of the card recycling device.

The conveying means of the card recycling device can advantageously convey the smart card intended for recycling on two different locations on the punching platform. A first location on the punching platform is dedicated to the deactivation of the smart card. A second location on the punching platform is dedicated to the perforation of the smart card in order to extract the chip. The first location on the punching platform is advantageously located above the second location. Said first location and second location are advantageously in alignment. Both locations comprises an opening in alignment with one another and adapted to the deployment of the punch.

The conveying means can be a succession of conveying belts, notably with a bifurcation leading to the first location or the second location on the punching platform. The conveying means can also comprise a lift to convey the card to the first location or the second location on the punching platform, notably when the first and second locations of the punching platform are arranged above one another. These bifurcations are also relevant for a configuration where the card recycling device is also able to retrieve a card without physical alteration. In this case, a first way of conveying means would lead to a retrieving compartment and a second way of conveying means would lead to one or several recycling compartment. The retrieving compartment can be the same as one of the recycling compartment or can be a separate compartment dedicated to the retrieving of card alone. Alternatively, the punching platform of the card recycling device may comprises a single location adapted to both deactivation and perforation of the smart card.

The punch of the card recycling device is configured to extend from a retracted position to a first deployed position in which it hits a chip of the smart card. When the punch is in the retracted position, it does not interfere with the smart card. When the punch is in the first deployed position, it applies pressure on the smart card. As mentioned before, the punch hit allows bending the smart card such that the antenna and/or the chip module is altered. Once deactivated, the smart card is conveyed to a recycling compartment.

The punch is further configured to extend form a retracted position to a second deployed position in which it perforates the smart card in order to extract the chip from said smart card.

Advantageously, the card recycling device comprises a chip recycling compartment disposed under the punching platform and in alignment with the punch and the opening. The extracted chip is recovered in the chip recycling compartment once the smart card has been perforated.

Preferably, the card recycling device comprises a first shredder at the entrance of the chip recycling compartment. When the extracted chip enters the chip recycling compartment, it goes through the first shredder.

The card recycling device can also comprise a card recycling compartment. This card recycling compartment recovers the ablated smart card after it has been perforated and that the chip has been separated from the rest of the smart card.

Advantageously, the card recycling device comprises a second shredder at the entrance of the card recycling compartment. When the ablated smart card enters the card recycling compartment, it goes through the second shredder.

It is also possible to recover the whole smart card in the card recycling compartment and to shred the whole card, but this is not the best embodiment as both metal of the chip and plastic of the card would be shredded together.

Advantageously, the card recycling device is also able to confiscate or retrieve a card with no physical alteration and sending it to a retrieving compartment. Said retrieving compartment can be the same as the recycling compartment or can be a separate compartment dedicated to the retrieving of card alone.

According to another aspect, the invention concerns a ATM (Automated Teller Machine) comprising a card recycling device as described above. The ATM comprises the well known element of the state of the art for an ATM. Said ATM notably comprises a card slot and a belt conveyor which are used with the card recycling device in the method of recycling the smart card.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
Fig. 1 shows an ATM (Automated Teller Machine) according to the invention
Fig.2 shows a card recycling device according to the invention with the punch in a retracted position
Fig.3 shows a card recycling device according to the invention with the punch in a different position

### DESCRIPTION OF PARTICULAR EMBODIMENTS

Aspects of the invention shall be further illustrated with reference to the figures.

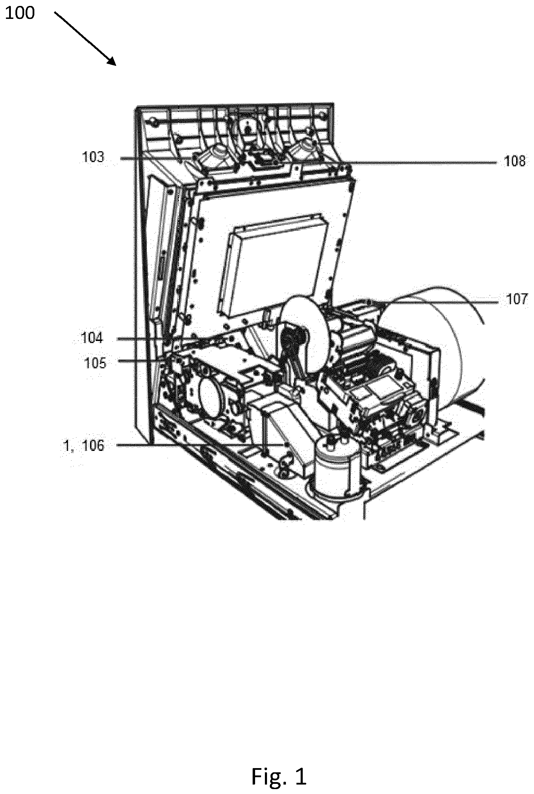

Figure 1 depicts an ATM 100 as well known from the state of the art. This ATM 100 notably comprises a card slot or card reader 105 configured to detect the card. Said card reader is advantageously configured to detect if a smart card is intended for recycling and/or expired. The ATM also comprise conveying means configured to convey a smart card to different locations inside the ATM. Those conveying means can notably comprise conveying belts.

The ATM also comprise a card reject box 106. This card reject box can be coupled to or replaced by the card recycle device 1 according to the invention.

This ATM 100 can also comprise speaker 103 and cameras 104, 108 for communication and security means.

When a user insert a smart card 5 inside the slot or card reader 105 of the ATM 100, said smart card 5 is detected by the ATM which proposes different operations to the user. When the smart card 5 is intended for recycling, the user instruct the ATM to recycle the card by selecting the appropriate operation, notably by interacting with a screen of the ATM. The smart card 5 is then conveyed, by using the ATM conveying means 10, to the card reject box 106 and/or to the card recycling device 1.

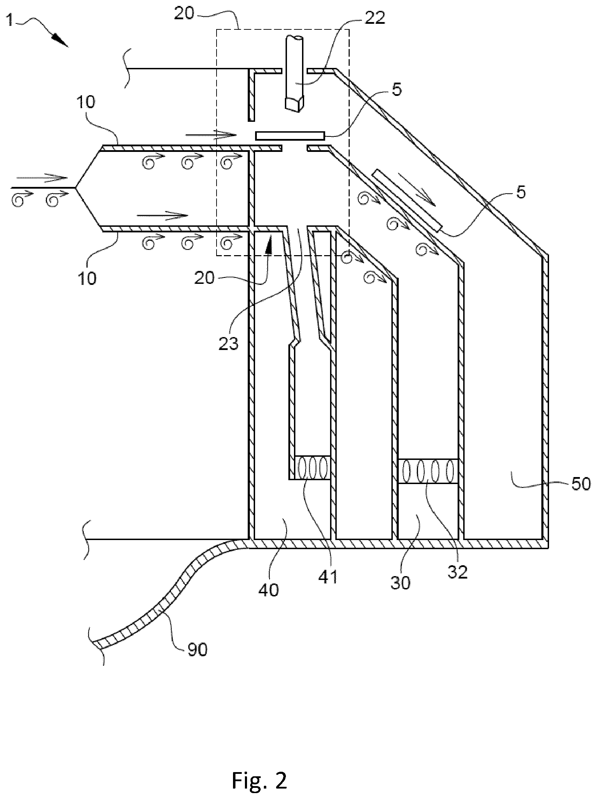

Figure 2 depicts a card recycling device 1 connected to an ATM 100 by the connecting means 90. The card recycling device 1 can replace the usual card reject box 106 of the ATM 100 of figure 1. In this illustration, the punch 22 is in a retracted position. A first smart card 5 is shown in the punching platform 20. A second smart card 5 that has been deactivated by the punch 22 is shown sliding along conveying means 10 and heading to the recycling compartment 50.

Alternatively, the smart card 5 is only retrieved without deactivation and conveyed to a retrieving compartment. Said retrieving compartment can be the same as the recycling compartment 50 or can be a separate compartment dedicated to the retrieving of card alone.

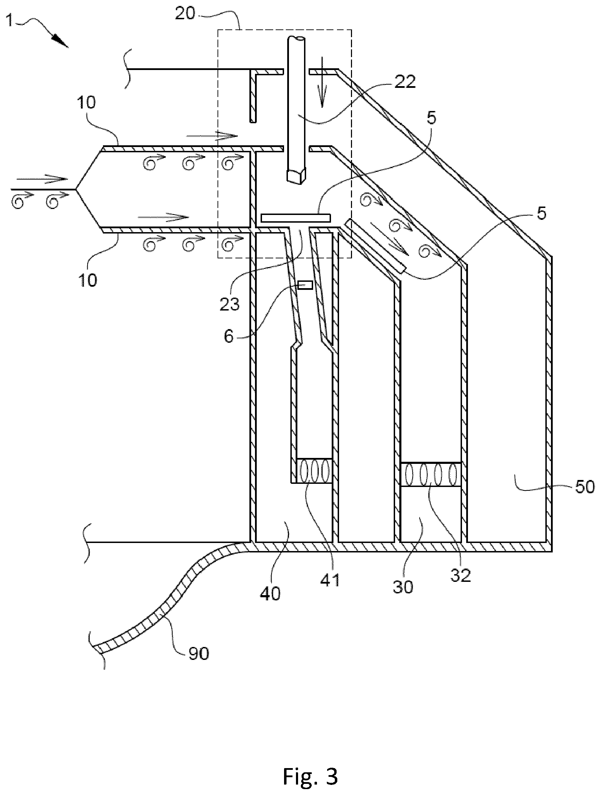

Figure 3 depicts the card recycling device 1 of figure 2 with the punch 22 in a different position. In figure 3, the punch comes back from its second deployed position in which it perforated the smart card 5. The smart card 5 is represented in the punching platform 20 with its chip 6 falling inside the chip recycling compartment 40. When the chip enters said chip recycling compartment 40, it goes through the first shredder such that the metallic chip is shredded. The ablated smart card 5 is then conveyed by the conveying means 10 to the card recycling compartment 30. When the ablated smart card 5 enters said card recycling compartment 30, it goes through the second shredder such that the plastic card is shredded. The metallic material of the smart card 5 is therefore separated from its plastic material. The shredded metal and shredded plastic is subsequently send to specific recycling facilities.

## Claims

1. Method for recycling a smart card (5) comprising the steps of:
- inserting the smart card (5) in a slot / card reader (105) of an ATM (Automated Teller Machine) (100),
- requesting the recycling of the smart card (5),
- conveying the smart cart (5) to a punching platform (20) of a card recycling device (1), said punching platform (20) comprising a punch (22) and an opening (23) in alignment with said punch (22),
- conveying at least part of the smart card (5) to a recycling compartment (30, 40, 50).

2. A method according to claim 1, comprising a step of deactivating the smart cart (5) by hitting a chip (6) of the smart card (5) with the punch (22) when said smart card (5) is in the punching platform (20).

3. A method according to claim 1, comprising a step of perforating the smart card (5) with a punch (22) to extract a chip (6) from said smart card (5) when said smart card (5) is in the punching platform.

4. A method according to claim 3, comprising a step of collecting the chip into a chip recycling compartment (40) disposed under the punching platform (20) and in alignment with the punch (22) and the opening (23).

5. A method according to claim 4, comprising a step of shredding the chip (6) when said chip (6) is entering the chip recycling compartment (40).

6. A method according to claim 4 to 5, comprising a step of removing the chip (6) or shredded chip from the chip recycling compartment (40) and sending said chip (6) or shredded chip to a metal recycling facility.

7. A method according to claims 3 to 6, comprising a step of shredding the ablated smart card (5) when entering a card recycling compartment (30) of the card recycling device (1).

8. A method according to claim 3 or 7, comprising a step of removing the ablated smart card (5) or shredded ablated smart card (5) from the card recycling compartment (30) and sending said ablated smart card (5) or shredded ablated smart card (5) to a plastic recycling facility.

9. Card recycling device (1) for an ATM (100), said card recycling device (1) comprising:
- conveying means (10) to convey the smart card (5) along the card recycling device (10),
- a punching platform (20) comprising a punch (22) and an opening (23) in alignment with said punch (22),
- a recycling compartment (30, 40, 50),
- connecting means (90) to connect the card recycling device with an ATM.

10. Card recycling device (1) according to claim 9, wherein the punch (22) is configured to extend from a retracted position to a first deployed position in which it hits a chip (6) of the smart card (5).

11. Card recycling device (1) according to claim 9 to 10, comprising a chip recycling compartment (40) disposed under the punching platform (20) and in alignment with the punch (22) and the opening (23).

12. Card recycling device (1) according to claims 9 to 11, wherein the punch (22) is further configured to extend form a retracted position to a second deployed position in which it perforates the smart card (5) in order to extract the chip (6) from said smart card (5).

13. Card recycling device (1) according to claims 11 to 12, comprising a first shredder (41) at the entrance of the chip recycling compartment (40).

14. Card recycling device (1) according to claims 12 to 13, comprising a card recycling compartment (30) and a second shredder (32) at the entrance of the card recycling compartment (30).

15. ATM (Automated Teller Machine) (100) comprising a card recycling device (1) according to one of claims 9 to 14.
